Europäisches Patentamt

European Patent Office

Office européen des brevets

(11) Veröffentlichungsnummer: **0 261 548 B1**

# EUROPÄISCHE PATENTSCHRIFT

(45) Veröffentlichungstag der Patentschrift: **12.06.91**

(51) Int. Cl.5: **C03B 29/00**

(21) Anmeldenummer: **87113432.6**

(22) Anmeldetag: **15.09.87**

(54) **Verfahren und Vorrichtung zum Erhitzen eines flachen Gegenstandes aus thermoplastischem Material entlang einer vorbestimmten Zone.**

(30) Priorität: **24.09.86 DE 3632408**

(43) Veröffentlichungstag der Anmeldung:
**30.03.88 Patentblatt 88/13**

(45) Bekanntmachung des Hinweises auf die
Patenterteilung:
**12.06.91 Patentblatt 91/24**

(84) Benannte Vertragsstaaten:
**FR GB IT SE**

(56) Entgegenhaltungen:
**US-A- 3 395 008**

(73) Patentinhaber: **Schott Glaswerke**
**Hattenbergstrasse 10**
**W-6500 Mainz(DE)FR GB IT SE**

Patentinhaber: **Carl-Zeiss-Stiftung trading as**
**SCHOTT GLASWERKE**
**Hattenbergstrasse 10**
**W-6500 Mainz 1(DE)GB**

(72) Erfinder: **Juras, Karl-Heinz**
**Am Stollhenn 49**
**W-6500 Mainz 1(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

## Beschreibung

Beschreibung:

Die Erfindung betrifft eine Vorrichtung und ein Verfahren zum Erhitzen eines flachen Gegenstandes aus thermoplastischem Material, wie zum Beispiel einer Glas- oder Glaskeramikplatte entlang einer vorbestimmten Zone, beispielsweise entlang des gesamten Randbereichs einer Glasplatte.

Bisher war es üblich, zum Erhitzen eine Glasplatte an deren Randbereich beispielsweise um die Glasplatte zu bördeln, diese so lange über einen rechteckigen Kranz von stationär angeordneten Brennern zu halten, bis der Randbereich der Platte eine entsprechende Temperatur erreicht hatte. Bei diesem Verfahren sind Temperaturgradienten in den zu erhitzenden Randbereichen unvermeidbar.

In der DE-AS-11 42 994 wird zur Erzielung einer homogenen Temperaturverteilung in einer zu erhitzenden Randzone eines zu verschweißenden Glasgegenstandes vorgeschlagen, diese durch gleichsinnige Rotation des Glasgegenstandes um seine Achse an einem Kranz von stationär angeordneten Brennern entlang zu führen. Um auch nicht völlig konzentrische Konturen auf diese Art und Weise homogen aufheizen zu können, sind die Brenner nach der oben bezeichneten Druckschrift radial beweglich auf entsprechende Halterungen montiert. Bei Drehung des unrunden Gegenstandes führen die Brenner dann entsprechende Vorwärts- und Rückwärtsbewegungen in radialer Richtung aus, so daß sie der zu erhitzenden Außenkontur immer im gleichen Abstand gegenüberstehen.

Aus der DD-PS-14 721 ist ein Verfahren bekannt, bei welchem die zu verschweißenden Glasteile stationär angeordnet sind und die Brenner längs der Verschweißnaht mit konstanter Geschwindigkeit und im gleichen Abstand von nur wenigen Zentimetern umlaufen. Mehrere Brenner sind dabei jeweils zu Brennerblöcken zusammengefaßt, die durch Kurvensteuerung geführt werden.

Die Aufgabe der vorliegenden Erfindung ist ein Verfahren und eine Vorrichtung, um einen flachen Gegenstand aus thermoplastischem Material entlang einer beliebigen Zone rasch, genau und vor allem homogen auf eine gewünschte Temperatur zu erhitzen. Diese Aufgabe wird mit einem Verfahren und mit einer Vorrichtung gemäß den Patentansprüchen 1 und 3 gelöst.

Das wesentliche an der Erfindung besteht darin, daß die Brenner und der zu erhitzende Gegenstand nicht stationär zueinander eingesetzt werden, sondern daß hintereinander angeordnete Brenner über die zu erhitzende Zone bewegt werden. Daraus ergibt sich eine große Vielfalt hinsichtlich der Gestalt der zu erhitzenden Zone und der Art des Erhitzens, und zwar homogen, ohne Stellen mit unterschiedlichen Temperaturen.

Die Erfindung ist in der Zeichnung an zwei Ausführungsbeispielen dargestellt. Es zeigt
Fig. 1 einen seitlichen Schnitt durch einen Teil der ersten Ausführungsform der Erfindung und
Fig. 2 eine Draufsicht auf diese Ausführungsform,
Fig. 3 und 4 einen seitlichen Schnitt und eine Draufsicht auf eine andere Ausführungsform der Erfindung.

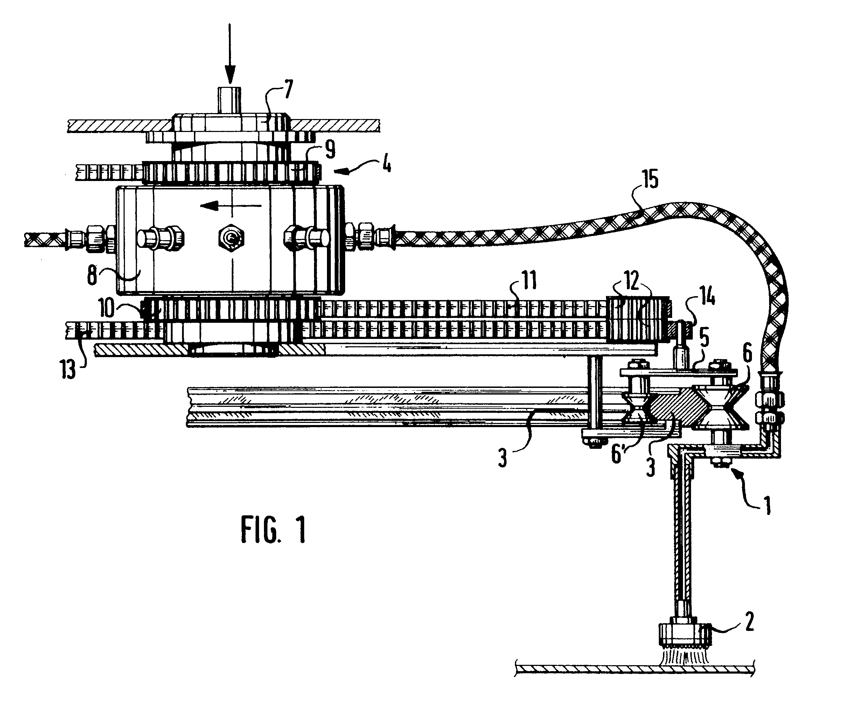

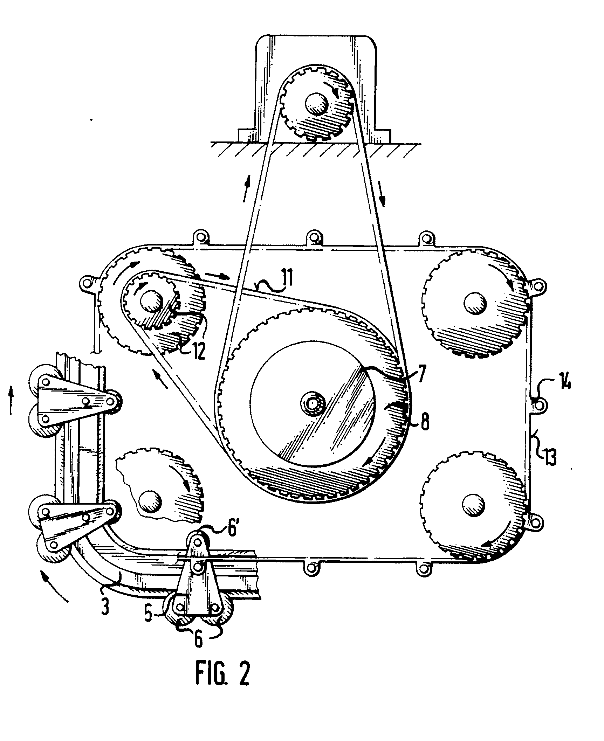

Wie die Fig. 1 und 2 erkennen lassen, besteht die erfindungsgemäße Vorrichtung aus einer Mehrzahl von hintereinander angeordneten Brennereinheiten 1, die jeweils an einem Fahrgestell 5 hängen, welches mittels rollen 6,6' entlang einer Schienenschleife 3 geführt wird. Die Schienenschleife 3 entspricht ungefähr der Kontur der zu erhitzenden Zone, so daß die an den Brennereinheiten befestigten Brenner 2, automatisch entlang der zu erhitzenden Zone geführt werden. Es können mehrere Brenner 2 an einer Brennereinheit 1 hängen.

Das Fahrgestell 5 jeder Brennereinheit weist in der hier dargestellten Ausführungsform drei Rollen auf, wobei zwei größere Rollen 6 an der Außenkante der Schienenschleife 3 laufen und eine etwas kleinere Rolle 6' an deren Innenkante läuft.

Die Brennereinheiten 1 werden von einer zentralen Brennstoffverteilerstation 4 mit Brennstoff versorgt.

Diese zentrale Brennstoffverteilerstation 4 enthält auch den Antrieb für die Fahrgestelle 5, deren Brennereinheiten 1. Zu diesem Zwecke besteht die Brennstoffverteilerstation 4 im wesentlichen aus einem Stator 7, auf welchem ein Rotor 8 läuft, der oben ein erstes Zahnrad 9 trägt, über welches der Rotor 8 von einem außerhalb der zentralen Brennstoffverteilerstation 4 angeordneten Motor angetrieben wird.

Außerdem trägt der Rotor 8 unten ein zweites Zahnrad 10, über welches sämtliche Brennereinheiten 1 synchron angetrieben werden.

Zu diesem Zweck läuft über dieses zweite Zahnrad 10 ein erster Zahnriemen 11, der ein Antriebsrad 12 antreibt. Auf einem weiteren Zahnrad, welches auf der gleichen Antriebswelle, wie das Zahnrad 12 montiert ist, läuft noch ein zweiter Zahnriemen 13, welcher an seiner Außenseite mit Mitnehmern 14 ausgerüstet ist. Diese Mitnehmer 14 bewegen mittels eines am Fahrgestell 5 der Brennereinheit 1 oben angeordneten Zapfens (nicht dargestellt) diese Brennereinheiten entlang der Schienenschleife 3.

Wie bereits erwähnt, versorgt die zentrale Brennstoffverteilerstation die Brennereinheiten 1 mit Brennstoff. Zu diesem Zwecke bildet der Rotor 8 eine Brennstoffverteilerkammer, von der elastische Schläuche 15 zu diesen Brennereinheiten 1 geführt sind.

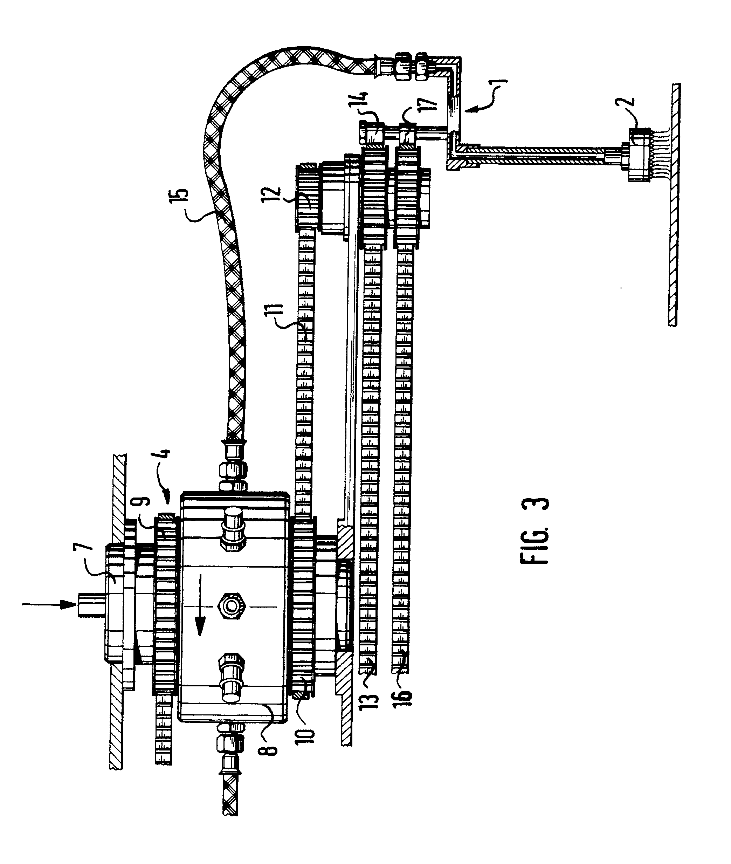

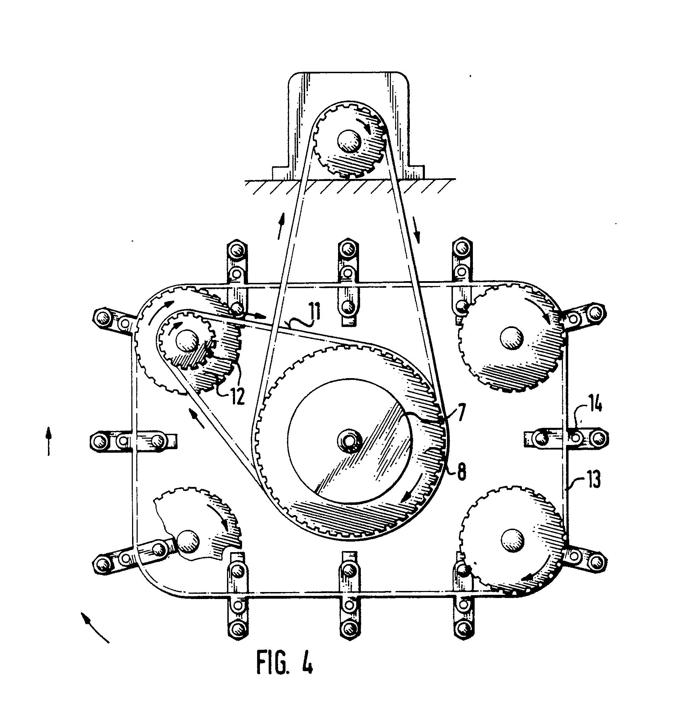

Fig. 3 und 4 erläutern eine andere Ausführungsform der Erfindung. Bei dieser Ausführungsform wird auf die Schienenschleife 3 verzichtet. Stattdessen ist unterhalb des zweiten Zahnriemens 13 ein dritter Zahnriemen 16 angeordnet, der über ein weiteres Zahnrad läuft, welcher auf der gleichen Antriebswelle wie das Zahnrad 12 montiert ist. Dieser dritte Zahnriemen 16 ist an seiner Außenseite mit Mitnehmern 17 ausgerüstet. Die Führung der Brennereinheiten 1 erfolgt bei dieser Ausführungsform mittels der Zahnriemen 13 und 16 mit Mitnehmern 14 und 17.

Wie die erfindungs gemäß Vorrichtung zum Erwärmen eines Gegenstandes aus thermoplastischem Material eingesetzt wird, hängt von den Umständen ab. Die Vorrichtung kann jeder beliebigen Gestalt des zu erhitzenden Gegenstandes angepaßt werden. Die Brenner können so gestaltet sein, daß sie an dem zu erhitzenden Gegenstand oben, seitlich oder sogar von unten angreifen.

## Ansprüche

1. Verfahren zum Erhitzen eines flachen Gegenstandes aus thermoplastischem Material entlang einer vorbestimmten Zone, wobei eine Mehrzahl von hintereinander angeordneten Brennereinheiten (1) entlang der zu erhitzenden Zone geführt wird und die Brennereinheiten (1) auf einer in sich geschlossenen Bahn umlaufen und von einer zentral im Inneren der Bahn stationär angeordneten Brennstoffverteilerstation (4), die sich synchron zu den Brennereinheiten (1) bewegt, mit Brennstoff versorgt werden.

2. Verfahren nach Anspruch 1, dadurch gekennzeichnet, daß die Gestalt der Bahn der Außenkontur des Gegenstandes aus thermoplastischem Material entspricht.

3. Vorrichtung zur Durchführung des Verfahrens gemäß den Ansprüchen 1 bis 2 mit einer Mehrzahl von hintereinander angeordneten Brennereinheiten (1), die auf einer in sich geschlossenen Bahn umlaufen, welche die zu erhitzenden Zone überstreicht, und einer zentral im Inneren der Bahn stationär angeordnete Brennstoffverteilerstation (4), welche sich synchron mit den umlaufenden Brennereinheiten (1) bewegt und diese mit Brennstoff versorgt.

4. Vorrichtung nach Anspruch 3, gekennzeichnet durch eine in sich geschlossene Schienenschleife (3), an der die umlaufenden Brennereinheiten (1) entlangführbar sind.

5. Vorrichtung nach Anspruch 4, dadurch gekennzeichnet, daß die Schienenschleife (3) eine Gestalt aufweist, die der Gestalt der zu erhitzenden Zone entspricht.

6. Vorrichtung nach einem der Ansprüche 4 oder 5, dadurch gekennzeichnet, daß jede Brennereinheit (1) ein Fahrgestellt (5) aufweist mit Rollen (6,6'), welche an der Schienenschleife (3) entlanglaufen, und an denen Brenner (2) hängen.

7. Vorrichtung nach Anspruch 6, dadurch gekennzeichnet, daß jedes Fahrgestell (5) drei Rollen aufweist, wobei zwei größere Rollen (6) an der Außenkante der Schienenschleife (3) laufen und eine kleinere Rolle (6') an der Innenkante der Schienenschleife läuft.

8. Vorrichtung nach Anspruch 3, dadurch gekennzeichnet, daß sie zur Führung der Brennereinheiten entlang der zu erhitzenden Zone Riemenelemente (13) und (16) mit Mitnehmern (14) und (17) zur Befestigung der Brennereinheiten (1) aufweist.

9. Vorrichtung nach Anspruch 8, dadurch (13, 16) gekennzeichnet, daß die Riemenelemente eine solche Führung aufweisen, die der Gestalt der zu erhitzenden Zone entspricht.

10. Vorrichtung nach einem der Ansprüche 3 bis 9, dadurch gekennzeichnet, daß die Brennstoffverteilerstation (4) einen Stator (7) aufweist, auf welchem ein Rotor (8) läuft mit einem ersten Zahnrad (9) zum Antrieb dieses Rotors und mit einem zweiten Zahnrad (10) zum synchronen Antrieb der Brennereinheiten (1).

11. Vorrichtung nach Anspruch 10, dadurch gekennzeichnet, daß der Rotor (8) eine Brennstoffverteilerkammer bildet, von welcher elastische Schläuche (15) zu den Brennereinheiten (1) geführt sind, die den Brennstoff von der Brennstoffkammer zu den Brennereinheiten (1) leiten.

## Claims

1. A method for heating a flat object made of thermoplastic material along a predetermined zone, wherein a plurality of burner units (1) arranged one behind the other are guided along the zone to be heated, and the burner units (1) circulating on a self-contained track are supplied with fuel from a fuel-distributing station (4) which is stationarily arranged centrally in the interior of the track and which moves synchronously with the burner units (1).

2. A method according to Claim 1, characterised in that the shape of the track corresponds to the outline of the object made of thermoplastic material.

3. A device for carrying out the method according to Claims 1 and 2 having a plurality of burner units (1) arranged one behind the other which circulate on a self-contained track which sweeps the zone to be heated, and having a fuel-distributing station (4) which is stationarily arranged centrally in the interior of the track and which moves synchronously with the circulating burner units (1) and supplies the latter with fuel.

4. A device according to Claim 3, characterised by a self-contained rail loop (3) along which the circulating burner units (1) can be guided.

5. A device according to Claim 4, characterised in that the shape of the rail loop (3) corresponds to that of the zone to be heated.

6. A device according to either Claim 4 or Claim 5, characterised in that each burner unit (1) has a chassis (5) with rollers (6, 6' ) which run along the rail loop (3) and on which burners (2) are suspended.

7. A device according to Claim 6, characterised in that each chassis (5) has three rollers, two larger rollers (6) running on the outer edge of the rail loop (3) and one smaller roller (6') running on the inner edge of the rail loop.

8. A device according to Claim 3, characterised in that, for guiding the burner units along the zone to be heated, the device has belt elements (13) and (16) with carriers (14) and (17) for fixing the burner units (1).

9. A device according to Claim 8, characterised in that the belt elements (13, 16) have a guide which corresponds to the shape of the zone to be heated.

10. A device according to any one of Claims 3 to 9, characterised in that the fuel-distributing station (4) has a stator (7) on which a rotor (8) runs, with a first cogwheel (9) for driving this rotor and with a second cogwheel (10) for synchronously driving the burner units (1).

11. A device according to Claim 10, characterised in that the rotor (8) forms a fuel-distributing chamber from which resilient hoses (15) are guided to the burner units (1), which hoses convey the fuel from the fuel chamber to the burner units (1).

## Revendications

1. Procédé pour réchauffer un article plat en matériau thermoplastique dans une zone prédéterminée, dans lequel une pluralité d'unités de brûleurs (1) disposés les unes derrière les autres se déplacent le long d'une zone à réchauffer et les unités de brûleurs (1) circulent sur un chemin fermé et sont alimentées en combustible par l'intermédiaire d'un poste de distribution de combustible (4) central disposé à l'intérieur du chemin, qui se déplace de manière synchrone avec les unités de brûleurs 1.

2. Procédé selon la revendication 1, caractérisé en ce que la forme du chemin correspond au contour extérieur de l'article en matériau thermoplastique.

3. Dispositif pour la mise en oeuvre du procédé selon les revendications 1 et 2, comportant une pluralité d'unités de brûleurs disposées les unes derrière les autres qui se déplacent sur un chemin fermé, qui correspond à la zone à réchauffer, et un poste de distribution de combustible (4) central disposé à l'intérieur du chemin, qui alimente les unités de brûleurs (1) mobiles en combustible et se déplace de manière synchrone avec celles-ci.

4. Dispositif selon la revendication 3, caractérisé par une boucle de rails (3) fermée le long de laquelle peuvent se déplacer les unités de brûleurs (1) mobiles.

5. Dispositif selon la revendication 4, caractérisé en ce que la boucle de rails (3) a une forme qui correspond à la forme de la zone à réchauffer.

6. Dispositif selon l'une des revendications 4 ou 5, caractérisé en ce que chaque unité de brûleurs (1) comporte un chariot (5) muni de galets (6, 6') qui circule le long de la boucle de rails (3) et sur lequel sont fixés les brûleurs (2).

7. Dispositif selon la revendication 6, caractérisé en ce que chaque chariot (5) comporte trois galets, deux galets plus gros (6) roulant sur la face extérieure de la boucle de rails (3) et un galet plus petit (6') roulant sur la face intérieure de la boucle de rails.

8. Dispositif selon la revendication 3, caractérisé en ce qu'il présente, pour l'entraînement des unités de brûleurs le long de la zone à réchauffer, des éléments de courroies (13, 16) munis d'entraîneurs (14, 17) pour la fixation des unités de brûleurs (1).

9. Dispositif selon la revendication 8, caractérisé en ce que les éléments de courroie (13, 16) présentent un guidage qui correspond à la forme de la zone à réchauffer.

10. Dispositif selon l'une des revendications 3 à 9, caractérisé en ce que le poste de distribution de combustible (4) comporte un stator (7), sur lequel tourne un rotor (8) muni d'une première roue dentée (9) pour l'entraînement de ce rotor et d'une deuxième roue dentée (10) pour l'entraînement synchrone des unités de brûleurs (1).

11. Dispositif selon la revendication 10, caractérisé en ce que le rotor (8) constitue une chambre de distribution de combustible, de laquelle partent des flexibles (15) élastiques en direction des unités de brûleurs, qui amènent le combustible de la chambre de combustion aux unités de brûleurs (1).

FIG. 1

FIG. 2

FIG. 3

FIG. 4